# EUROPÄISCHE PATENTSCHRIFT

(11) **EP 2 843 396 B1**
(45) Veröffentlichungstag und Bekanntmachung des Hinweises auf die Patenterteilung: **02.03.2016**
(21) Anmeldenummer: 14180648.9
(22) Anmeldetag: 12.08.2014
(51) Int. Cl.: G01N 21/88, G01N 21/89

(54) **Beleuchtungssystem für eine Zeilenkamera**
Illumination system for a line scan camera
Système d'éclairage pour une caméra linéaire

(30) Priorität: 29.08.2013 DE 202013103920 U
(43) Veröffentlichungstag der Anmeldung: 04.03.2015
(73) Patentinhaber: BST eltromat International Leopoldshöhe GmbH, 33818 Leopoldshöhe (DE)
(72) Erfinder: Reckefuß, Klaus, 33818 Leopoldshöhe (DE); Meinhardt, Stefan, 33611 Bielefeld (DE); Sprütten, Thomas, 33739 Bielefeld (DE)
(74) Vertreter: Ter Meer Steinmeister & Partner

(56) Entgegenhaltungen:
- EP-A1- 1 826 555
- EP-B1- 2 011 755
- DE-A1-102010 047 539
- DE-B3-102012 101 310
- US-A1- 2011 284 765

## Beschreibung

Die Erfindung betrifft ein Beleuchtungssystem für eine Zeilenkamera, mit einem Reflektor in der Form eines Tunnels, der eine das Licht diffus streuende innere Oberfläche aufweist und das Licht einer Lichtquelle auf ein zellenförmiges Beobachtungsfeld lenkt, das von der Zeilenkamera aus durch einen Lichtaustrittsschlitz des Reflektors hindurch sichtbar ist.

Zur Inspektion von Druckerzeugnissen in Druckmaschinen oder Umrollern werden üblicherweise Zeilenkamerasysteme verwendet, mit denen ein auf einer durchlaufenden Bedruckstoffbahn erzeugtes Bild fotografiert wird. In jedem Augenblick wird dabei von der Zeilenkamera ein Bild eines quer über die Breite der Bedruckstoffbahn verlaufenden Streifens aufgenommen, der sich zu diesem Zeitpunkt im Beobachtungsfeld befindet. Das Beleuchtungssystem dient dazu, diesen Streifen der Bedruckstoffbahn so zu beleuchten, dass mit der Zeilenkamera ein kontrastreiches Bild aufgenommen werden kann. Die Beleuchtungseinrichtung kann dabei als Hellfeld-Beleuchtung oder als Dunkelfeld-Beleuchtung ausgeführt sein.

Wenn das Bild auf der Bedruckstoffbahn glänzend oder reflektierend ist oder zumindest glänzende oder reflektierende Bereiche aufweist, so kann bei einer Hellfeld-Beleuchtung eine Beeinträchtigung des Kontrasts dadurch eintreten, dass ein Teil des auf das Beobachtungsfeld auftreffenden Lichts direkt in die Kamera reflektiert wird. In solchen Fällen wird deshalb bevorzugt eine Dunkelfeld-Beleuchtung eingesetzt, mit der sich dieser Effekt vermeiden lässt. Bei einer Dunkelfeld-Beleuchtung kann das Licht der Beleuchtungseinrichtung nur unter solchen Winkeln auf das Beobachtungsfeld einfallen, dass das an reflektierenden Bereichen des Beobachtungsfelds reflektierte Licht nicht direkt in die Kamera fällt.

Aus EP 2 011 755 B1 ist ein Beleuchtungssystem der oben genannten Art bekannt, das entweder als Hellfeld oder Dunkelfeld-Beleuchtung ausgebildet,sein kann.

Aufgabe der Erfindung ist es, ein Beleuchtungssystem zu schaffen, das sich einfacher an unterschiedliche Anwendungsfälle anpassen lässt.

Diese Aufgabe wird durch ein Beleuchtungssystem gemäß Anspruch gelöst.

In der Konfiguration, in der auch bei dem zweiten Teil des Reflektors die das Licht diffus streuende Oberfläche dem Inneren des Tunnels zugewandt ist, arbeitet das Beleuchtungssystem als Hellfeld-Beleuchtung, da das von der Lichtquelle ausgehende Licht an der gesamten Innenfläche des Tunnels diffus gestreut wird, so dass es aus allen Richtungen auf das Beobachtungsfeld einfällt. Wenn jedoch der zweite Teil des Reflektors in die Position geschwenkt wird, in der die Licht absorbierende Fläche dem Inneren des Tunnels zugewandt ist, lässt sich eine Durikelfeld-Beleuchtung erreichen, da dann aus der Richtung, in der sich die absorbierende Fläche befindet, kein Licht auf das Beobachtungsfeld fällt.

Vorteilhafte Ausgestaltungen und Weiterbildungen der Erfindung sind in den Unteransprüchen angegeben.

Bevorzugt hat der durch den Reflektor gebildete Tunnel in der Hellfeld-Konfiguration die Querschnittsform eines Kreissegments oder Halbkreises, dessen Durchmesser bzw. Sehne durch die Oberfläche der Bedruckstoffbahn gebildet wird.

Bei der Lichtquelle handelt es sich vorzugsweise um eine zeilenförmige Lichtquelle, beispielsweise eine LED-Zeile, deren Licht durch einen Eintrittsschlitz von einer Seite her in den Tunnel eingestrahlt wird. Der schwenkbare Teil des Reflektors ist dann vorzugsweise auf der Seite angeordnet, die dem Eintrittsschlitz gegenüber liegt. Somit kann der Eintrittsschlitz durch den stationären Teil des Reflektors begrenzt oder in diesem ausgebildet werden.

Der Lichtaustrittsschlitz ist vorzugsweise derart angeordnet, dass ein Sehstrahl, der von der Zeilenkamera durch den Lichtaustrittsschlitz zum Beobachtungsfeld verläuft und dort gespiegelt wird, auf den schwenkbaren Teil des Reflektors trifft und mittelbar oder unmittelbar auf die absorbierende Fläche gelenkt wird, wenn sich dieser Teil des Reflektors in der Dunkelfeld-Konfiguration befindet.

In der Dunkelfeld-Konfiguration braucht nicht die gesamte Oberfläche des schwenkbaren Teils des Reflektors, die dem Inneren des Tunnels zugewandt ist, absorbierend zu sein. Es genügt, wenn derjenige Teil dieser Oberfläche absorbierend ist, der dann von dem am Beobachtungsfeld gespiegelten Sehstrahl der Zeilenkamera getroffen wird. Andere Oberflächenbereiche dieses Teils des Reflektors können verspiegelt sein, damit auch in der Dunkelfeld-Konfiguration eine hohe Lichtausbeute erreicht wird. Beispielsweise kann der schwenkbare Teil des Reflektors so gestaltet sein, dass der Tunnel in der Dunkelfeld-Konfiguration durch eine etwa senkrecht auf der Bedruckstoffbahn stehende verspiegelte Wand begrenzt wird, an die sich ein etwa parallel zur Bedruckstoffbahn verlaufender, an den Lichtsaustrittschlitz angrenzender absorbierender Abschnitt anschließt.

Im folgenden wird ein Ausführungsbeispiel anhand der Zeichnung näher erläutert.

Es zeigen:
- Fig. 1: einen schematischen Querschnitt eines erfindungsgemäßen Beleuchtungssystems in einer Hellfeld-Konfiguration; und
- Fig. 2: das Beleuchtungssystem nach Fig. 1 in einer Dunkelfeld-Konfiguration.

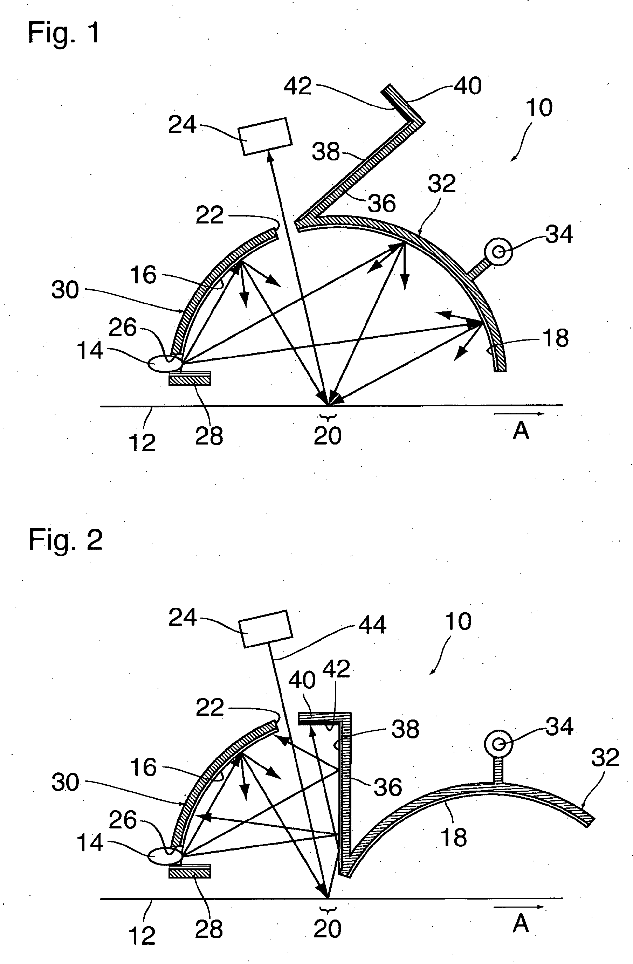

Das in Fig. 1 gezeigte Beleuchtungssystem weist einen Reflektor 10 in der Form eines Tunnels auf, der in der in Fig. 1 gezeigten Konfiguration die Querschnittsform eines Halbkreises hat, der eine in Richtung eines Pfeils A durchlaufende Bedruckstoffbahn 12 überwölbt. Längs einer Kante des Reflektors 10 ist eine zeilenförmige Lichtquelle 14 so angeordnet, dass Licht in das Innere des Reflektors eingestrahlt und an das Licht diffus streuenden (vorzugsweise weißen) inneren Oberflächen 16, 18 gestreut wird, so dass die Bedruckstoffbahn 12 weitgehend gleichmäßig ausgeleuchtet wird. Insbesondere wird ein zellenförmiges Beobachtungsfeld 20, das sich etwa in der Mitte des Reflektors 10 über die Breite der Bedruckstoffbahn 12 erstreckt, aus allen Richtungen gleichmäßig ausgeleuchtet.

Der Reflektor 10 ist an einer Stelle durch einen Lichtaustrittsschlitz 22 unterbrochen, hinter dem eine Zeilenkamera 24 so angeordnet ist, dass das Beobachtungsfeld 20 von der Zeilenkamera 24 aus durch den Lichtaustrittsschlitz 22 hindurch sichtbar ist und somit die Zeilenkamera 24 in der Lage ist, ein Bild des Beobachtungsfeldes 20 aufzunehmen.

Die Lichtquelle 14 ist im gezeigten Beispiel in einem Einlassschlitz 26 angeordnet, der durch eine Kante des Reflektors 10 und eine verspiegelte Blende 28 begrenzt wird, die parallel zur Bedruckstoffbahn 12 angeordnet ist. Die Blende 28 verhindert, dass das Licht der Lichtquelle 14 direkt auf das Beobachtungsfeld 20 fällt. Statt dessen wird das Licht von der Blende 28 in das Innere des Reflektors reflektiert, so dass es auf dessen diffus streuende Oberflächen 16, 18 trifft.

Der Lichtaustrittsschlitz 22 ist etwas versetzt zur Mitte des Reflektors 10 auf der Seite angeordnet, auf der sich die Lichtquelle 14 befindet. Der Sehstrahl von der Zeilenkamera 24 zum Beobachtungsfeld 20 bildet deshalb mit der Normalen auf die Bedruckstoffbahn 12 einen Winkel von etwa 10 bis 15°.

Durch den Lichtaustrittsschlitz 22 wird der Reflektor 10 in zwei Teile 30, 32 unterteilt, nämlich einen stationären Teil 30 auf der Seite der Lichtquelle 14 und einen schwenkbaren Teil 32, der sich über einen etwas größeren Bogenwinkel erstreckt, auf der gegenüber liegenden Seite. Der schwenkbare Teil 32 ist um eine Achse 34 schwenkbar, die in Längsrichtung des Reflektors 10 verläuft, also parallel zu dem zeilenförmigen Beobachtungsfeld 20 (in der Richtung senkrecht zur Zeichenebene in Fig. 1).

Von der Kante des Teils 32 des Reflektors, die den Lichtaustrittsschlitz 22 begrenzt, geht eine gerade Wand 36 aus, die eine verspiegelte Oberfläche 38 hat und am freien Ende einen rechtwinklig abgewinkelten Schirm 40 trägt, der eine geschwärzte und damit Licht absorbierende Fläche 42 bildet. In dem in Fig. 1 gezeigten Zustand liegen die Wand 36 und der Schirm 40 außerhalb des Tunnels, der das Beobachtungsfeld 20 überwölbt.

Wenn jedoch der schwenkbare Teil 32 des Reflektors um die Achse 34 in die in Fig. 2 gezeigte Position geschwenkt wird, so nimmt die gerade Wand 36 eine Position ein, in der sie sich in der Nähe des Beobachtungsfeldes 20, jedoch auf der der Lichtquelle 14 entgegengesetzten Seite, etwa rechtwinklig zur Bedruckstoffbahn 12 erstreckt, und in der der Schirm 40 so gehalten wird, dass er mit seiner Kante den Lichtaustrittsschlitz 22 begrenzt. Der durch den Reflektor gebildete Tunnel hat nun annähernd die Form eines Viertelkreises, der begrenzt wird durch die diffus streuende Oberfläche 16 des stationären Teils 30 des Reflektors, die reflektierende Oberfläche 38 der geraden Wand 36 und die absorbierende Fläche 42 des Schirms 40. Das Licht der Lichtquelle, das nicht direkt auf die streuende Oberfläche 16 fällt, wird an der reflektierenden Oberfläche 38 reflektiert und trifft dann größtenteils auf die streuende Oberfläche 16, von der es auf die Bedruckstoffbahn 12 gelenkt wird. Auf diese Weise wird eine hohe Lichtausbeute erreicht. Wahlweise kann die reflektierende Oberfläche 38 auch etwas (konkav) gekrümmt sein, um das Licht noch stärker zu bündeln.

In der in Fig. 2 gezeigten Konfiguration wirkt das Beleuchtungssystem als Dunkelfeld-Beleuchtung. Wenn die Bedruckstoffbahn im Bereich des Beobachtungsfeldes 20 glänzende oder reflektierende Oberflächenzonen aufweist, so wird ein Sehstrahl 44, der von der Zeilenkamera 24 durch den Lichtaustrittsschlitz 22 auf das Beobachtungsfeld 20 fällt, an den glänzenden Oberflächenzonen reflektiert, und er fällt streifend auf die reflektierende Oberfläche 38 der Wand 16, wo er erneut reflektiert wird, bis er schließlich auf die absorbierende Fläche 42 des Schirms 40 trifft. Ebenso wäre es denkbar, dass ein Sehstrahl, der unter etwas steilerem Einfallswinkel auf den in Fig. 2 linken Rand des Beobachtungsfeldes 20 trifft, direkt auf den Schirm 42 reflektiert wird. In jedem Fall ist sichergestellt, dass die Zeilenkamera 24 in dem durch die glänzenden Oberflächenzonen im Beobachtungsfeld 20 gebildeten "Spiegel", ausschließlich die geschwärzte Fläche 42 "sieht", mit der Folge, dass die reflektierenden Oberflächenzonen im Beobachtungsfeld 20 für die Zeilenkamera als dunkel erscheinen.

## Patentansprüche

1. Beleuchtungssystem für eine Zeilenkamera (24), mit einem Reflektor (10) in der Form eines Tunnels, der eine das Licht diffus streuende innere Oberfläche (16, 18) aufweist und das Licht einer Lichtquelle (14) auf ein zellenförmiges Beobachtungsfeld (20) lenkt, das von der Zeilenkamera (24) aus durch einen Lichtaustrittsschlitz (22) des Reflektors hindurch sichtbar ist, **dadurch gekennzeichnet, dass** der Lichtaustrittsschlitz (22) den Reflektor in einen stationären Teil (30) und einen schwenkbaren Teil (32) unterteilt, wobei der schwenkbare Teil (32) auf einem Teil eine Licht absorbierende Fläche (42) und auf einem anderen Teil einen Teil der die das Licht diffus streuende Oberfläche (18) aufweist und um eine in Längsrichtung des Beobachtungsfeldes (20) verlaufende Achse (34) aus einer Position, in der die das Licht diffus streuende Oberfläche (18) dem Inneren des Tunnels zugewandt ist, in eine Position schwenkbar ist, in der die Licht absorbierende Fläche (42) dem Inneren des Tunnels zugewandt ist.

2. Beleuchtungssystem nach Anspruch 1, bei dem der Reflektor (10) in der Stellung, in der die diffus streuende Oberfläche (18) des schwenkbaren Teils (32) des Reflektors dem Inneren des Tunnels zugewandt ist, im Querschnitt die Form eines Kreissegments hat, dessen Sehne in der Ebene des Beobachtungsfelds (20) liegt.

3. Beleuchtungssystem nach Anspruch 2, bei dem das Kreissegment annähernd ein Halbkreis ist.

4. Beleuchtungssystem nach einem der vorstehenden Ansprüche, bei dem die Lichtquelle (14) zeilenförmig ausgebildet und so angeordnet ist, dass sie Licht von einer Seite her in den durch den Reflektor (10) gebildeten Tunnel einstrahlt.

5. Beleuchtungssystem nach einem der vorstehenden Ansprüche, bei dem der Lichtaustrittsschlitz (22) und die Licht absorbierende Fläche (42) so angeordnet sind, dass, wenn sich der schwenkbare Teil (32) des Reflektors (10) in der Stellung befindet, in der die absorbierende Fläche (42) dem Inneren des Tunnels zugewandt ist, diese absorbierende Fläche (42) von einem Sehstrahl (44) getroffen wird, der von der Zeilenkamera (24) ausgehend durch den Lichtaustrittsschlitz (22) hindurch auf das Beobachtungsfeld (20) trifft und an diesem gespiegelt wird.

6. Beleuchtungssystem nach Anspruch 5, bei dem der von der Zeilenkamera (24) durch den Lichtaustrittsschlitz (22) auf das Beobachtungsfeld (20) treffende Sehstrahl (44) mit der Ebene des Beobachtungsfeldes (20) einen Winkel von weniger als 90°, vorzugsweise einen Winkel zwischen 75 und 85° bildet und die Lichtquelle (14) auf der Seite des Reflektors (10) angeordnet ist, auf der sich der stationäre Teil (30) dieses Reflektors befindet.

7. Beleuchtungssystem nach Anspruch 6, bei dem die Licht absorbierende Fläche (42) an einem Schirm (40) gebildet ist, der in der Stellung des schwenkbaren Teils (32) des Reflektors, in der die absorbierende Fläche (42) dem Inneren des Tunnels zugewandt ist, den Lichtaustrittsschlitz (22) begrenzt.

8. Beleuchtungssystem nach Anspruch 7, bei dem der Schirm (40) am Ende einer Wand (36) angeordnet ist, die in der Stellung, in der die absorbierende Fläche (42) dem Inneren des Tunnels zugewandt ist, etwa rechtwinklig zur Ebene des Beobachtungsfeldes (20) verläuft und den Tunnel auf der der Lichtquelle (14) entgegengesetzten Seite des Beobachtungsfeldes (20) begrenzt.

9. Beleuchtungssystem nach Anspruch 8, bei dem die den Schirm (40) tragende Wand (36) eine verspiegelte Oberfläche (38) hat.

## Claims

1. Illumination system for a line scan camera (24), comprising a tunnel-shaped reflector (10) having an internal surface (16) which scatters the light diffusely and directs the light of a light source (14) onto a linear observation field (20) that is visible from the line scan camera (24) through a light exit slot (22) of the reflector, **characterized in that** the light exit slot (22) divides the reflector into a stationary part (30) and a pivotable part (32), the pivotable part (32) having a light absorbing surface (42) on one portion thereof and a surface (18) which diffusely scatters the light on another portion thereof and being pivotable about an axis (34) that extends in longitudinal direction of the observation field (20) from a position in which the diffusely scattering surface (18) faces the interior of the tunnel into a position in which the light absorbing surface (42) faces the interior of the tunnel.

2. Illumination system according to claim 1, wherein the reflector (10), in the position in which the diffusely scattering surface (18) of the pivotable part (32) of the reflector faces the interior of the tunnel, has the cross-sectional shape of a segment of a circle the chord of which extends in the plane of the observation field (20).

3. Illumination system according to claim 2, wherein the segment of the circle is approximately a half circle.

4. Illumination system according to any of the preceding claims, wherein the light source (14) has a linear configuration and is arranged such that it irradiates light from a lateral side into the tunnel formed by the reflector (10).

5. Illumination system according to any of the preceding claims, wherein the light exit slot (22) and the light absorbing surface (42) are arranged such that, when the pivotable part (32) of the reflector is in the position in which the light absorbing surface (42) faces the interior of the tunnel, this light absorbing surface (42) is hit by a ray (44) which passes from the line scan camera (24) through the light exit slot (22) onto the observation field (20) and is reflected thereat.

6. Illumination system according to claim 5, wherein the ray (44) which passes from the line scan camera (24) through the light exit slot (22) and hits the observation field (20) forms an angle of less than 90°, preferably an angle between 75 and 85° with the plane of the observation field (20), and the light source (14) is arranged on the side of the reflector (10) on which the stationary part (30) of the reflector is provided.

7. Illumination system according to claim 6, wherein the light absorbing surface (42) is formed at a screen (40) which, in the position of the pivotal part (32) of the reflector in which the light absorbing surface (42) faces the interior of the tunnel, delimits the light exit slot (22).

8. Illumination system according to claim 7, wherein the screen (40) is provided at one end of a wall (36) which, in the position in which the light absorbing surface (42) faces the interior of the tunnel, extends approximately at right angles to the plane of the observation field (20) and delimits the tunnel on the side of the observation field (20) opposite to the light source (14).

9. Illumination system according to claim 8, wherein the wall (36) carrying the screen (40) has a mirror-finished surface (38).

## Revendications

1. Système d'éclairage pour une caméra linéaire (24), comportant un réflecteur (10) ayant la forme d'un tunnel, qui comporte une surface intérieure (16, 18) répandant la lumière de manière diffuse et qui dirige la lumière d'une source de lumière (14) vers un champ d'observation en forme de lignes (20), laquelle lumière peut être vue à partir de la caméra linéaire (24) à travers une fente de sortie de lumière (22) du réflecteur, **caractérisé en ce que** la fente de sortie de lumière (22) divise le réflecteur en une partie fixe (30) et une partie pivotante (32), dans lequel la partie pivotante (32) comporte, sur une partie, une face (42) absorbant la lumière et, sur une autre partie, une partie de la surface (18) répandant la lumière de manière diffuse et qui peut pivoter autour d'un axe (34) s'étendant dans une direction longitudinale du champ d'observation (20) à partir d'une position dans laquelle la surface (18) répandant la lumière de manière diffuse est dirigée vers l'intérieur du tunnel, jusqu'à une position dans laquelle la face (42) absorbant la lumière est dirigée vers l'intérieur du tunnel.

2. Système d'éclairage selon la revendication 1, dans lequel le réflecteur (10) a, dans la position dans laquelle la surface (18) répandant la lumière de manière diffuse de la partie pivotante (32) du réflecteur est dirigée vers l'intérieur du tunnel, la forme d'un segment circulaire en coupe transversale, dont la corde se situe dans le plan du champ d'observation (20).

3. Système d'éclairage selon la revendication 2, dans lequel le segment circulaire est approximativement un demi-cercle.

4. Système d'éclairage selon l'une des revendications précédentes, dans lequel la source de lumière (14) est configurée en forme de lignes et est agencée de telle sorte qu'elle émet de la lumière à partir d'un côté dans le tunnel formé à travers le réflecteur (10).

5. Système d'éclairage selon l'une des revendications précédentes, dans lequel la fente de sortie de lumière (22) et la face (42) absorbant la lumière sont agencées de telle sorte que lorsque la partie pivotante (32) du réflecteur (10) se trouve dans la position dans laquelle la face absorbante (42) est dirigée vers l'intérieur du tunnel, cette face absorbante (42) est atteinte par un rayon visuel (44) qui atteint le champ d'observation (22) en partant de la caméra linéaire (24) à travers la fente de sortie de lumière (22) et est réfléchi sur celui-ci.

6. Système d'éclairage selon la revendication 5, dans lequel le rayon visuel (44) atteignant le champ d'observation (20) à partir de la caméra linéaire (24) à travers la fente de sortie de lumière (22) forme avec le plan du champ d'observation (20) un angle inférieur à 90°, de préférence un angle compris entre 75 et 85°, et la source de lumière (14) est agencée sur le côté du réflecteur (10) sur lequel se trouve la partie fixe (30) de ce réflecteur.

7. Système d'éclairage selon la revendication 6, dans lequel la face (42) absorbant la lumière est formée sur un écran (40) qui, dans la position de la partie pivotante (32) du réflecteur dans laquelle la face absorbante (42) est dirigée vers l'intérieur du tunnel, délimite la fente de sortie de lumière (22).

8. Système d'éclairage selon la revendication 7, dans lequel l'écran (40) est agencé sur l'extrémité d'une paroi (36) qui, dans la position dans laquelle la face absorbante (42) est dirigée vers l'intérieur du tunnel, s'étend de manière sensiblement perpendiculaire au plan du champ d'observation (20) et délimite le tunnel sur le côté opposé à la source de lumière (14) du champ d'observation (20).

9. Système d'éclairage selon la revendication 8, dans lequel la paroi (36) portant l'écran (40) a une surface rendue réfléchissante (38).
